# EUROPÄISCHE PATENTSCHRIFT

(11) **EP 2 220 922 B1**
(45) Veröffentlichungstag und Bekanntmachung des Hinweises auf die Patenterteilung: **14.11.2018**
(21) Anmeldenummer: 10000884.6
(22) Anmeldetag: 28.01.2010
(51) Int. Cl.: A01B 3/46

(54) **Pflug**
Plough
Charrue

(30) Priorität: 18.02.2009 DE 102009009381
(43) Veröffentlichungstag der Anmeldung: 25.08.2010
(73) Patentinhaber: PÖTTINGER Landtechnik GmbH, 4710 Grieskirchen (AT)
(72) Erfinder: Hehenberger, Martin, 4070 Eferding (AT)
(74) Vertreter: Thoma, Michael

(56) Entgegenhaltungen:
- EP-A1- 2 014 145
- DE-A1- 2 349 042
- DE-A1- 2 436 853
- DE-A1- 19 718 988

## Beschreibung

Die vorliegende Erfindung betrifft einen Aufsatteldrehpflug, mit einem länglichen, vorzugsweise balkenförmigen Rahmenträger, an dem eine Vielzahl von Pflugscharen nebeneinander befestigt sind, einem Aufsattelrad, das über einen Radträger mit dem Rahmenträger verbunden ist, sowie einem Rahmenlager, das einen vorderen Abschnitt des Rahmenträgers mit einer an einem Schlepper anbaubaren Deichsel verbindet.
Bei derartigen Aufsattelpflügen wird üblicherweise ein Fahrrahmen verwendet, der einerseits über das Aufsattelrad am Boden abgestützt wird und andererseits an seinem vorderen Ende über die Deichsel am Schlepper abgestützt wird, die am genannten Schlepper um eine aufrechte Achse schwenkbar angelenkt wird. An diesem Fahrrahmen ist dann der genannte Rahmenträger gelagert, der die Pflugschare trägt. Bei Ausbildung des Pflugs als Drehpflug sind an dem genannten Rahmenträger zwei Reihen von Pflugscharen befestigt, wobei der Rahmenträger am Fahrrahmen um dessen Längsachse schwenkbar gelagert ist, so dass zum Wenden des Pflugs der Rahmenträger mit den daran befestigten Pflugscharreihen über den Fahrrahmen hinweg auf die andere Seite geschwenkt werden kann. Über den genannten Fahrrahmen, an dem der die Pflugschare tragende Rahmenträger befestigt ist, werden die Zugkräfte vom Rahmenrohr zur Deichsel eingeleitet. Zudem trägt der genannte Fahrrahmen die Gewichtskraft des Pfluges beim Wenden und im Straßentransport.
Bislang unbefriedigend ist bei derartigen Aufsattelpflügen der Verstellbereich, und zwar insbesondere hinsichtlich der Erstkörperschnittbreite. Die genannte Erstkörperschnittbreite wird dabei regelmäßig über ein Viergelenk oder eine Schlittenverstellung eingestellt, welche aber nur einen sehr begrenzten Einstellweg aufweisen, vgl. beispielsweise EP 2 014 145 A1. Probleme ergeben sich hieraus insbesondere bei Schleppern mit geringer Innenspurbreite, da in diesem Fall bei nicht ausreichendem Verstellbereich nicht die volle Arbeitsbreite eingestellt werden kann. Um es dennoch zu ermöglichen, bei solchen Aufsattelpflügen auch außerhalb der Furche fahren zu können, wurde deshalb bereits vorgeschlagen, eine zusätzliche Klappvorrichtung vorzusehen, die jedoch zusätzliche Kosten und Gewichtsbelastung mit sich bringt und überdies die Stabilität der Konstruktion verringert.

Aus der DE 197 18 988 ist ein Aufsattelpflug bekannt, dessen die Pflugschare tragender Rahmenträger um eine aufrechte Achse gelenkig an einem Rahmenlager angelenkt ist, das quer von einer Deichsel des Aufsattelpflugs auskragt. Durch einen Hydraulikzylinder kann der die Pflugschare tragende Rahmenträger gegenüber dem genannten Rahmenlager verschwenkt werden. Dabei können die Pflugschare in Längsrichtung des balkenförmigen Rahmenträgers in ihrem Abstand voneinander durch verstellbare Klemmplatten variiert werden, um auch bei Verschwenkung des Rahmenträgers immer den gleichen gegenseitigen Abstand der Pflugkörper einhalten zu können.

Der vorliegenden Erfindung liegt die Aufgabe zugrunde, einen verbesserten Pflug der eingangs genannten Art zu schaffen, der Nachteile des Standes der Technik vermeidet und Letzteren in vorteilhafter Weise weiterbildet. Vorzugsweise soll ein sehr großer Verstellbereich für die Erstkörperschnittbreite erreicht werden, die bei Furchenfahrt eine Einstellung des ersten Körpers auf volle Arbeitsbreite erlaubt und vorzugsweise beim Pflügen auch ein Fahren des Schleppers außerhalb der Furche, d.h. on land ermöglicht, ohne dies durch hohe Gewichtsbelastungen und zusätzliche Kosten sowie eine verringerte Stabilität zu erkaufen.

Erfindungsgemäß wird diese Aufgabe durch einen Pflug gemäß Anspruch 1 gelöst. Bevorzugte Ausgestaltungen der Erfindung sind Gegenstand der abhängigen Ansprüche.

Es wird also vorgeschlagen, den die Pflugschare tragenden Rahmenträger unmittelbar an einer ausreichend lang gestalteten Knickdeichsel anzulenken und die Zugkräfte über den genannten Rahmenträger unmittelbar in die Deichsel einzuleiten, wobei die Deichsel gegenüber dem genannten Rahmenträger um eine aufrechte Schwenkachse abgeknickt und in verschiedene Winkelstellungen gebracht werden kann, wodurch die Erstkörperschnittbreite entsprechend verstellt wird. Erfindungsgemäß ist das Rahmenlager um eine aufrechte Schwenkachse schwenkbar mit der Deichsel verbunden, wobei Einstellmittel zur Einstellung verschiedener Schwenkwinkel zwischen Rahmenlager und Deichsel vorgesehen sind. Je nachdem, welcher Knickwinkel zwischen Deichsel und Rahmenlager und damit dem Rahmenträger eingestellt ist, sucht sich der Pflug sozusagen hinter dem Anlenkpunkt der Deichsel seine Bahn weiter rechts oder weiter links, wodurch die Erstkörperschnittbreite entsprechend verändert wird. Die Geometrieverhältnisse, insbesondere der Schwenkbereich der Deichsel gegenüber dem Rahmenträger und die Länge der Deichsel sowie die Beabstandung der Schwenkachse vom Rahmenträger, sind dabei vorteilhafterweise derart getroffen, dass einerseits beim Pflügen in der Furche die volle Erstkörperschnittbreite genutzt werden kann und andererseits auch ein Pflügen on land erfolgen kann, bei dem zumindest der Erstkörper außerhalb der Schlepperspur pflügt, und/oder weiterhin auch die Erstkörperverstellung bei Verstellung der Körperschnittbreite in einem Verhältnis mitverstellt wird.

In Weiterbildung der Erfindung wird auf einen Fahrrahmen, der den Radträger fest mit der Deichsel verbindet und über den die Zugkräfte vom die Pflugschare tragenden Rahmenträger her eingeleitet werden, gänzlich verzichtet. Vorteilhafterweise ist die Deichsel mit dem Aufsattelrad nur durch einen Stabilisator verbunden, der einerseits gelenkig an der Deichsel angelenkt und andererseits gelenkig an dem Aufsattelrad bzw. dessen Radträger angelenkt ist. Über den genannten Stabilisator kann die Spur und der Spurwinkel des Aufsattelrades stabilisiert werden. Der genannte Stabilisator kann hierbei grundsätzlich verschieden ausgebildet sein, wobei vorzugsweise eine Stabilisatorstrebe nach Art einer Stange vorgesehen ist. Die gelenkige Anlenkung des Stabilisators an der Deichsel einerseits und an dem Aufsattelrad andererseits besitzt vorzugsweise eine mehrachsige Gelenkigkeit insbesondere nach Art eines Kugelgelenks, so dass durch den Stabilisator letztlich nur der Abstand und/oder die Neigung zwischen Deichsel und Aufsattelrad bzw. Radträger gesteuert bzw. stabilisiert wird. Über die weitere Anlenkung des Radträgers am die Pflugschare tragenden Rahmenträger ergibt sich hierdurch eine Steuerung bzw. Stabilisierung des Spurwinkels.

Nach einer vorteilhaften Ausführung der Erfindung kann hierbei der genannte Stabilisator längenveränderlich ausgebildet sein, insbesondere teleskopierbar ausgebildet und mittels eines fremdenergiebetätigbaren Kraftaktors längenverstellt werden, um aktiv die Einstellung der Radträgerstellung beeinflussen zu können. Vorteilhafterweise kann eine zusätzliche Anlenkung der Pflugkörper vorgesehen sein, durch die über die Längenverstellung die Neigung der Pflugkörper mitverstellt und somit die Arbeitsbreite geändert werden kann.

Zwischen der genannten Deichsel und dem Radträger des Aufsattelrades besteht hierbei vorteilhafterweise von dem Stabilisator abgesehen keine weitere direkte Verbindung. Insbesondere ist kein fester Fahrrahmen vorgesehen.

Der genannte Radträger ist vorteilhafterweise an dem Rahmenträger, der die Pflugschare trägt, um eine aufrechte Schwenkachse schwenkbar befestigt. Da der Pflug als Wendepflug ausgebildet ist, ist der genannte Radträger an einem vom Rahmenträger beabstandeten Abschnitt um eine liegende Schwenkachse schwenkbar mit dem Aufsattelrad verbunden, so dass der Radträger beim Wenden des Pflugs sozusagen über das Aufsattelrad und/oder dessen Fahrtrichtungsachse hinweg geschwenkt werden kann.

Um die Zugkräfte auch bei fahrrahmenfreier Ausbildung vom Rahmenträger her direkt in die Deichsel einleiten zu können, ist das Rahmenlager des Rahmenträgers an der Deichsel zwar um die genannte aufrechte Schwenkachse schwenkbar angelenkt, jedoch bezüglich einer Querachse quer zur Deichsellängsachse drehfest an der Deichsel befestigt. Hierdurch wird der Rahmenträger und die daran befestigten Pflugschare in vertikaler Richtung an zwei Punkten abgestützt, nämlich einerseits am Aufsattelrad und andererseits über die diesbezüglich starr ausgebildete Verbindung zwischen Rahmenlager und Deichsel sowie deren Abstützpunkt am Schlepper.

Insofern der genannte Pflug als Wendepflug ausgebildet ist, ist die genannte aufrechte Schwenkachse zwischen Rahmenlager und Deichsel nicht unmittelbar starr an der Deichsel befestigt, sondern an einem Wendekopf, der zum Wenden des Pflugs um eine Wendeachse etwa parallel zur Deichsellängsachse und insbesondere etwa koaxial zur Deichsellängsachse gegenüber der Deichsel gewendet werden kann. Wird der genannte Wendekopf um die Deichsel herum geschwenkt, wird das daran angelenkte Rahmenlager und damit der daran befestigte Rahmenträger mitgenommen und sozusagen über die Deichsel hinweg auf deren andere Seite geschwenkt. Die genannte aufrechte Schwenkachse zwischen Rahmenlager und Deichsel bzw. Schwenkkopf stürzt hierbei um 180° von einer aufrechten Stellung in eine wiederum aufrechte Stellung.
Um einen ausreichenden Verstellbereich der Erstkörperschnittbreite bei nicht übermäßigen Knickwinkeln zwischen Deichsel und Hauptrahmenlager bzw. Rahmenträger zu ermöglichen, ist in Weiterbildung der Erfindung die Deichsel ausreichend lang ausgebildet. In Weiterbildung der Erfindung beträgt die Länge der Deichsel zwischen ihrem Anlenkpunkt am Schlepper und der Position der genannten aufrechten Schwenkachse des Rahmenlagers mindestens 50 % und vorzugsweise etwa 75 % bis 300 % des Abstandes zweier in Längsrichtung des Rahmenträgers benachbarter Pflugschare. Insbesondere kann die genannte Deichsellänge etwa 75 % bis 200 % und insbesondere etwa 100 % bis 150 % des Abstands zweier benachbarter Pflugschare betragen. Alternativ oder zusätzlich kann die Deichsellänge insbesondere derart bemessen sein, dass bei Verstellung der Arbeitsbreite der einzelnen Körper bzw. Pflugschare die Arbeitsbreite des ersten Körpers in demselben oder in zueinander verhältnismäßigem Ausmaß mitverstellt wird.
Dabei ist der Rahmenträger, an dem die Pflugschare befestigt sind, von der Knickachse zwischen Deichsel und Rahmenlager ebenfalls ausreichend beabstandet. Das Hauptrahmenlager umfasst ein quer vom Rahmenträger auskragendes Anlenkstück, das starr mit dem Rahmenträger verbunden ist und an seinem vom Rahmenträger auskragenden Abschnitt die genannte aufrechte Knick- bzw. Schwenkachse an dem mit der Deichsel verbundenen Wendekopf trägt. Die Länge des genannten Anlenkstücks bzw. der senkrechte Abstand des Rahmenträgers von der aufrechten Schwenkachse beträgt hierbei vorteilhafterweise etwa 50 % bis 150 % und insbesondere etwa 75 % bis 125 % des Abstandes zweier benachbarter Pflugschare. In Bezug auf die Deichsellänge kann die Länge des genannten Anlenkstücks und damit der Abstand des Rahmenträgers von der aufrechten Schwenkachse etwa 50 % bis 100 % und vorzugsweise etwa 75 % betragen.

Der Knickwinkel zwischen Deichsel und Rahmenausleger bezüglich der genannten aufrechten Schwenkachse beträgt vorzugsweise zumindest 30° und vorzugsweise 45° oder mehr, um den gewünschten sehr großen Verstellbereich zu erzielen. Um insgesamt einen günstigen Kraftfluss bei großer Verstellbarkeit zu erzielen, kann der Verstellbereich des genannten Knickwinkels hierbei derart bemessen sein, dass zumindest einerseits eine etwa parallele Stellung von Deichsel und Rahmenträger, vorzugsweise auch eine leicht negativ überdrückte Stellung mit einem Winkel von - 10°, und andererseits eine positive Abknickung mit einem Winkel von bis zu etwa 45° zwischen der Deichsel und dem genannten Rahmenträger betrachtet in einer Draufsicht eingestellt werden kann.

Die Einstellmittel sind hierbei vorteilhafterweise stufenlos arbeitend ausgebildet, so dass beliebige Zwischenstellungen zwischen den beiden genannten Knickwinkeleinstellungen angefahren und festgestellt werden können. Das Einstellmittel kann hierbei grundsätzlich verschieden ausgebildet sein. Beispielsweise kann ein mechanischer Schwenkantrieb wie etwa eine Schneckenradstufe und/oder eine Spindel vorgesehen sein. Alternativ oder zusätzlich kann ein hydraulischer Drehantrieb vorgesehen sein, der vorteilhafterweise einen doppelt wirkenden Hydraulikzylinder umfassen kann, dem eine Steuervorrichtung zur stufenlosen Einstellung der Position des Hydraulikzylinder zugeordnet sein kann. Der genannte Hydraulikzylinder kann hierbei von der aufrechten Schwenkachse beabstandet einerseits am Rahmenlager und/oder dem Rahmenträger und andererseits an der Deichsel und/oder dem daran befestigten Wendekopf befestigt sein.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Seitenansicht eines Wendepflugs, der an einem Schlepper angebaut ist,
- Fig. 2:: eine schematische Draufsicht auf den als Aufsattelwendepflug ausgebildeten Pflug aus Fig. 1, der die Deichsel in einer Schwenkstellung etwa parallel zum Rahmenträger, der die Pflugschare trägt, zeigt, so dass beim Pflügen in der Furche die volle Erstkörperschnittbreite genutzt werden kann,
- Fig. 3:: eine schematische Draufsicht auf den Aufsattelpflug ähnlich Fig. 2, wobei eine andere Winkeleinstellung zwischen Deichsel und Rahmenträger dargestellt ist, so dass der Erstkörper weiter aus der Spur fährt, und
- Fig. 4:: eine schematische Draufsicht auf den Aufsattelpflug ähnlich den Figuren 2 und 3, wobei eine weiter abgeknickte Stellung der Deichsel gegenüber dem Rahmenträger gezeigt ist, so dass der Erstkörper außerhalb der Schlepperspur on land pflügt.

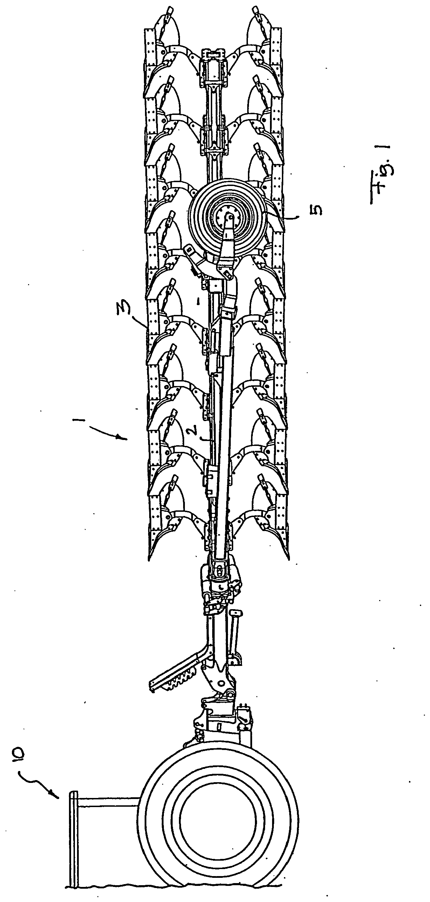

Der in den Figuren gezeigte Aufsattelwendepflug 1 umfasst einen balkenförmigen, länglichen Rahmenträger 2 in Form eines Rahmenrohrs, an dem voneinander beabstandet eine Vielzahl von Pflugscharen 3 befestigt sind. Hierbei sind, wie Fig. 1 zeigt, zwei Reihen von Pflugscharen 3 an dem Rahmenträger 2 befestigt, so dass der Pflug gewendet werden kann, wie noch beschrieben wird.

Der genannte Rahmenträger 2 wird hierbei in seiner hinteren Hälfte an einem hinteren Abschnitt von einem Aufsattelrad 4 am Boden abgestützt. Das genannte Aufsattelrad 4 ist hierbei durch einen Radträger 5 mit dem Rahmenträger 2 verbunden, so dass die Gewichtskräfte des Rahmenträgers 2 und der Pflugschare 3 am Aufsattelrad 4 abgestützt werden können. Der genannte Radträger 5 ist hierbei mit dem Aufsattelrad 4 um eine liegende, in Fahrtrichtung weisende Schwenkachse 6 schwenkbar verbunden, so dass beim Wenden des Pflugs der genannte Radträger 5 mit dem Rahmenträger 2 zusammen über das Aufsattelrad 4 hinweg von rechts nach links bzw. umgekehrt geschwenkt werden kann.

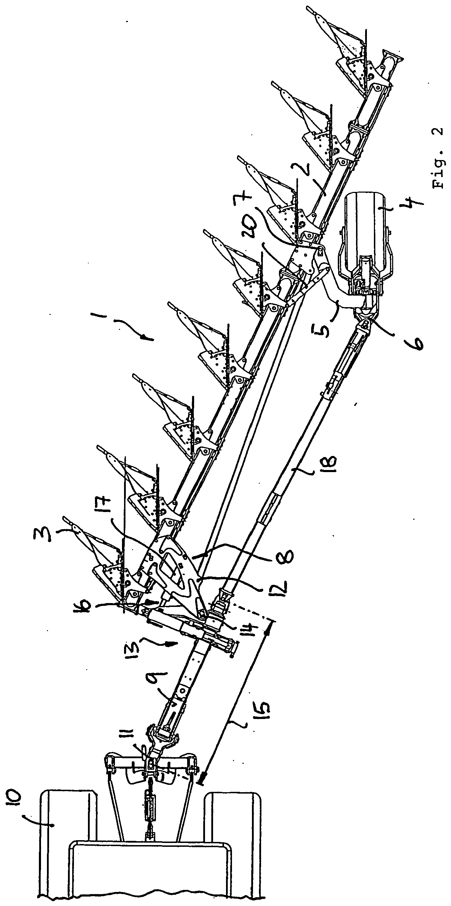

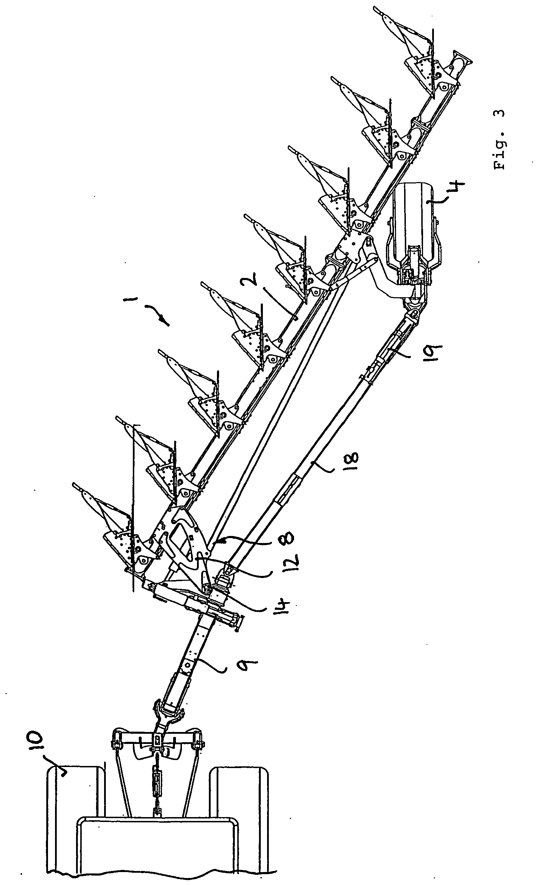

Mit seinem gegenüber liegenden rahmenseitigen Ende ist der genannte Radträger 5 an dem Rahmenträger 2 befestigt. Wie die Figuren 2 bis 4 zeigen, ist der Radträger 5 hierbei um eine aufrechte Schwenkachse 7 an dem Rahmenträger 2 bzw. einem damit verbundenen Radträgeranlenkstück befestigt.

In seiner vorderen Hälfte und gemäß der gezeichneten Ausführung in seinem vordersten Endabschnitt zwischen den ersten beiden Pflugscharen ist der Rahmenträger 2 mittels eines Hauptrahmenlagers in Form eines Rahmenauslegers 8 mit einer Deichsel 9 verbunden, die an ihrem vorderen Ende an einem Schlepper 10 um eine aufrechte Schwenkachse 11 gelenkig angelenkt ist. Der genannte Rahmenausleger 8 umfasst hierbei ein Anlenkstück 12, das beispielsweise als Pressblechprofil, aber auch als Rohr- oder Stabwerkprofil oder auch als einfacher Träger ausgebildet sein kann und quer vom Rahmenträger 2 auskragt. Das Anlenkstück 12 ist hierbei starr an dem Rahmenträger 2 zwischen dem Erstkörper und der zweiten Pflugschar befestigt. An seinem auskragenden Ende ist das Anlenkstück 12 mit der Deichsel 9 verbunden, genauer gesagt mit einem Wendekopf 13, der um die Deichsellängsachse schwenkbar mit der Deichsel 9 verbunden ist, so dass der Wendekopf 13 um die genannte Deichsel 9 herum geschwenkt werden kann, um den Pflug zu wenden. Hierzu ist dem Wendekopf 13 ein geeigneter, an sich bekannter Wendeantrieb zugeordnet.

Zwischen dem Anlenkstück 12 und der Deichsel 9 bzw. dem Wendekopf 13 ist hierbei eine aufrechte Schwenkachse 14 vorgesehen, so dass die Deichsel 9 gegenüber dem Rahmenträger 2 in verschiedene Knickstellungen bringbar ist, wie dies die Figuren 2 bis 4 verdeutlichen. Die aufrechte Schwenkachse 14 befindet sich hierbei am hinteren Ende der Deichsel 9. Bezüglich einer Querachse quer zur Deichsellängsrichtung ist die Verbindung zwischen dem Anlenkstück 12 und der Deichsel 9 jedoch drehfest ausgebildet, so dass einerseits auch Gewichtskräfte oder allgemein vertikale Kräfte des Rahmenträgers 2 und der daran befestigten Pflugschare 3 über die Deichsel 9 abgefangen werden können. Zum anderen wird das Anlenkstück 12 und damit der Rahmenträger 2 beim Verschwenken des Wendekopfs 13 entsprechend mitgenommen und gewendet.

Wie die Figuren 2 bis 4 verdeutlichen, beträgt in der gezeichneten Ausführungsform die Deichsellänge 15 etwa 50 % bis 200 %, vorzugsweise etwa 75 % bis 150 % der Innenspurbreite des Schleppers. In Bezug auf die Geometrie des Pfluges 1 selbst beträgt die genannte Deichsellänge 15 vorzugsweise gemäß der gezeichneten Ausführungsform etwa 100 % bis 150 % des Abstands zweier Pflugschare und/oder etwa 100 % bis 150 % der Länge des Anlenkstücks 12, d.h. dessen auskragender Länge senkrecht zur Längsrichtung des Rahmenträgers 2.

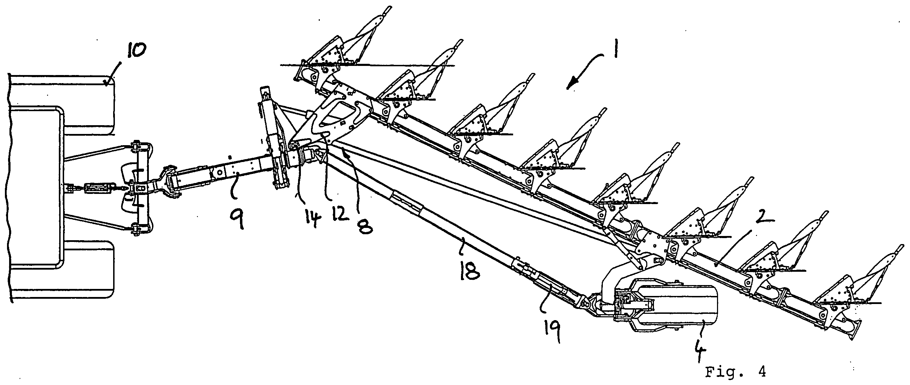

Wie ein Vergleich der Figuren 2 bis 4 zeigt, kann die Deichsel 9 gegenüber dem Rahmenträger 2 um zumindest 45° verschwenkt werden, wobei hierbei vorzugsweise zumindest einerseits eine Stellung einstellbar ist, in der sich die Deichsel 9 und der Rahmenträger 2 zueinander parallel erstrecken, vgl. Fig. 2 und andererseits eine Stellung eingestellt werden kann, in der sich der Rahmenträger 2 in einem Winkel von etwa 45° zur Deichsel 9 erstreckt, vgl. Fig. 4.

Zur entsprechenden Einstellung dieses Schwenk- bzw. Knickwinkels sind Einstellmittel 16 vorgesehen, die vorzugsweise stufenlos arbeitend ausgebildet sind, so dass beliebige Zwischenstellungen anfahrbar sind. In der gezeichneten Ausführungsform umfassen die genannten Einstellmittel 16 einen Druckmittelzylinder 17, der einerseits am Rahmenausleger 8 und andererseits an der Deichsel 9 bzw. dem daran befestigten Wendekopf 13 jeweils beabstandet von der aufrechten Schwenkachse 14 angelenkt ist, so dass eine Längenänderung des genannten Druckmittelzylinders 17 ein Abknicken bzw. Verschwenken der Deichsel 9 bewirkt.

Die Zugkräfte vom Rahmenträger 2 werden direkt über den genannten Rahmenausleger 8 in die Deichsel 9 und nicht erst über einen hier fehlenden Fahrrahmen eingeleitet. Zwischen der Deichsel 9 und dem Aufsattelrad 4 ist lediglich ein Stabilisator 18 in Form einer teleskopierbaren Stabilisatorstrebe vorgesehen, die an ihrem vorderen Ende gelenkig an der Deichsel 9 angelenkt ist und an ihrem hinteren Ende gelenkig mit dem Radträger 5 befestigt ist. Durch eine Längenänderung des Stabilisators, die durch einen fremdkraftbetätigten Aktor 19 beispielsweise in Form eines Hydraulikzylinders, der in die Stabilisatorstrebe integriert ist, bewirkt werden kann, kann der Abstand zwischen der Deichsel 9 und dem Radträger 5 verstellt werden. Angesichts der Anlenkung des Radträgers 5 am Rahmenträger 2 und dessen Verbindung mit der Deichsel 9 kann hierdurch der Spurwinkel des Aufsattelrades 4 zu den Pflugkörpern eingestellt werden. Alternativ kann über einen Lenker 20 die entsprechende Stellbewegung des Radträgers 5 zu einer Verschwenkung der Pflugschare 3 umgesetzt werden, um hierdurch die Arbeitsbreite einzustellen.

## Patentansprüche

1. Aufsatteldrehpflug, mit einem länglichen, vorzugsweise balkenförmigen Rahmenträger (2), an dem zwei Reihen von Pflugschare (3) nebeneinander befestigt sind, einem Aufsattelrad (4), das über einen Radträger (5), der um eine liegende, etwa in Fahrtrichtung weisende Schwenkachse (6) schwenkbar an dem Aufsattelrad (4) befestigt ist, mit dem Rahmenträger (2) verbunden ist, sowie einem Rahmenlager (8), das einen vorderen Abschnitt des Rahmenträgers (2) mit einer an einem Schlepper (10) anlenkbaren Deichsel (9) verbindet, wobei das Rahmenlager (8) um eine aufrechte Schwenkachse (14) schwenkbar mit der Deichsel (9) verbunden ist und Einstellmittel (16) zur Einstellung verschiedener Schwenkwinkel zwischen dem Rahmenlager (8) und der Deichsel (9) vorgesehen sind, wobei das Rahmenlager (8) ein quer vom Rahmenträger auskragendes, mit dem Rahmenträger (2) starr verbundenes Anlenkstück (12) umfasst, das an seinem vom Rahmenträger (2) auskragenden Abschnitt die genannte aufrechte Schwenkachse (14) trägt, die an einem Wendekopf (13) befestigt ist, der zum Wenden des Pflugs um eine Wendeachse etwa parallel zur Deichsellängsachse gegenüber der Deichsel (9) verschwenkbar ist, wobei das starr mit dem Rahmenträger verbundene Anlenkstück (12) einen Rahmenausleger bildet, dessen vom Rahmenträger (2) auskragende Länge 50% bis 150% des Abstands zweier benachbarter Pflugschare und/oder 50% bis 100% der Deichsellänge (15) beträgt.

2. Pflug nach dem vorhergehenden Anspruch, wobei die Deichsel (9) mit dem Aufsattelrad (4) durch einen Stabilisator (18), insbesondere eine Stabilisatorstrebe, verbunden ist, der einerseits gelenkig an der Deichsel (9) angelenkt und andererseits gelenkig an dem Aufsattelrad (4) angelenkt ist.

3. Pflug nach dem vorhergehenden Anspruch, wobei der Stabilisator (18) die einzige direkte Verbindung zwischen dem Aufsattelrad (4) und der Deichsel (9) ist und/oder der Aufsattelpflug frei von einem festen, mit dem Aufsattelrad (4) verbundenen Fahrrahmen ausgebildet ist.

4. Pflug nach einem der beiden vorhergehenden Ansprüche, wobei der gelenkig eingebaute Stabilisator (18) längenveränderbar, insbesondere teleskopierbar, ausgebildet ist.

5. Pflug nach einem der vorhergehenden Ansprüche, wobei das Hauptrahmenlager (8) an der Deichsel (9) bezüglich einer Querachse quer zur Deichsellängsachse drehfest befestigt ist.

6. Pflug nach einem der vorhergehenden Ansprüche, wobei der Radträger (5) um eine aufrechte Schwenkachse (7) schwenkbar an dem Rahmenträger (2) gelagert ist.

7. Pflug nach einem der vorhergehenden Ansprüche, wobei die Deichsel (9) eine Deichsellänge besitzt, die bei Verstellung der Arbeitsbreite der einzelnen Pflugschare (3) die Arbeitsbreite der ersten Pflugschar (3) im selben oder in zueinander verhältnismäßigem Ausmaß mitverstellt und/oder eine Deichsellänge von etwa 50 % bis 200 %, insbesondere etwa 75 % bis 150 %, vorzugsweise 100 % bis 150 % des Abstands zweier in Längsrichtung des Rahmenträgers (2) benachbarter Pflugschare (3) besitzt.

8. Pflug nach einem der vorhergehenden Ansprüche, wobei die Deichsel (9) gegenüber dem Rahmenträger (2) um die genannte aufrechte Schwenkachse (14) über einen Winkelbereich von mindestens 30°, vorzugsweise 45° oder mehr, vorzugsweise in einem Winkelbereich von -10° bis +35° verschwenkbar ist.

9. Pflug nach dem vorhergehenden Anspruch, wobei die Deichsel (9) gegenüber dem Rahmenträger (2) um die genannte aufrechte Schwenkachse (14) derart verschwenkbar ist, dass zumindest einerseits eine Stellung einstellbar ist, in der sich die Deichsel (9) und der Rahmenträger (2) zueinander parallel erstrecken, und andererseits eine Stellung einstellbar ist, in der die Deichsel (9) gegenüber dem Rahmenträger (2) um 45° abgeknickt ist.

10. Pflug nach einem der vorhergehenden Ansprüche, wobei die Einstellmittel (16) zur Einstellung des Schwenkwinkels zwischen der Deichsel (9) und dem Rahmenlager (8) einen stufenlos einstellbaren, vorzugsweise fremdkraftbetätigbaren Aktor, insbesondere einen Hydraulikzylinder, umfassen.

## Claims

1. Semi-mounted reversible plough, with an elongated, preferably beam-shaped frame support (2), on which to rows of ploughshares (3) are fastened next to one another, a support wheel (4), which is connected with the frame support (2) via a wheel carrier (5), which is pivotably fastened to the support wheel (4), around a horizontal pivot axis (6), facing roughly in the direction of travel, as well as a frame mount (8), which connects a front section of the frame support (2) with a tow bar (9) hingible on a tractor (10), wherein the frame mount (8) is pivotably connected with the tow bar (9) around an upright pivot axis (14), and adjusting means (16) are provided for adjusting different pivot angles between the frame support (8) and the tow bar (9), wherein the frame mount (8) includes an articulating piece (12) projecting transversely from the frame support, rigidly connected with the frame support (2), which articulating piece, on its section projecting from the frame support (2), supports the named upright pivot axis (14), which is fastened to a turning head (13), which, for the turning of the plough around a turning axis, is pivotable roughly parallel to the longitudinal tow bar axis relative to the tow bar (9), wherein the articulating piece (12), rigidly connected with the frame support, forms a frame boom, whose length, projecting from the frame support (2) amounts to 50% to 150% of the distance of two neighboring ploughshares and/or 50% to 100% of the tow bar length (15).

2. Plough according to the preceding claim, wherein the tow bar (9) is connected with the support wheel (4) through a stabilizer (18), in particular a stabilizer strut, which, on the one hand, is hinged on the tow bar (9) in an articulated manner, and on the other hand, is hinged on the support wheel (4) in an articulated manner.

3. Plough according to the preceding claim, wherein the stabilizer (18) is the only direct connection between the support wheel (4) and the tow bar (9), and/or the semi-mounted plough is designed free from a fixed drive frame connected with the support wheel (4).

4. Plough according to one of the two preceding claims, wherein the flexibly built- in stabilizer (18) is designed to be variable in length, in particular telescopic.

5. Plough according to one of the preceding claims, wherein the main frame mount (8) is fixed in a non-rotatable manner to the tow bar (9) with respect to a transverse axis transverse to the tow bar longitudinal axis.

6. Plough according to one of the preceding claims, wherein the wheel carrier (5) is pivotably mounted on the frame support (2) around an upright pivotal axis (7).

7. Plough according to one of the preceding claims, wherein the tow bar (9) has a tow bar length, which, upon the adjustment of the working width of the individual ploughshares (3), co-adjusts the working width of the first plough share (3) to the same extent, or to an extent proportional to one another, and/or possesses a tow bar length of roughly 50 % to 200 %, in particularly roughly 75 % to 150 %, preferably 100 % to 150 % of the distance of two ploughshares (3) neighbored in the longitudinal direction of the frame support (2).

8. Plough according to one of the preceding claims, wherein the tow bar (9) is pivotable, relative to the frame support (2), around the named upright pivot axis (14), over an angle range of at least 30°, preferably 45° or more, preferably in an angle range of -10° to +35°.

9. Plough according to the preceding claim, wherein the tow bar (9), relative to the frame support (2), is pivotable around the named upright pivot axis (14) in such a manner that at least, on the one hand, a position, in which the tow bar (9) and the frame support (2) extend parallel to one another, is adjustable, and on the other hand a position, in which the tow bar (9), relative to the frame support, is bent over by 45°, is adjustable.

10. Plough according to one of the preceding claims, wherein the adjusting means (16) for adjusting the pivot angle between the tow bar (9) and the frame mount (8) include a continuously adjustable actuator, preferably operable by an external force, in particular a hydraulic cylinder.

## Revendications

1. Charrue semi-portée, équipée d'un support de châssis (2) oblong, de préférence en forme de poutre, sur lequel deux rangées de socs (3) sont fixées côte à côte, d'une roue porteuse (4), qui est reliée au support de châssis (2) par l'intermédiaire d'un support de roue (5) qui est fixé sur la roue porteuse (4) de manière à pouvoir pivoter autour d'un axe de pivotement (6) horizontal, plus ou moins dans le sens de la marche, ainsi que d'une potence transversale (8), qui relie une partie avant du support de châssis (2) à une barre de traction (9) pouvant être articulée sur un tracteur (10), la potence transversale (8) étant reliée à la barre de traction (9) de manière à pouvoir basculer autour d'un axe de pivotement vertical (14) et des moyens de réglage (16) destinés à régler divers angles de pivotement étant prévus entre la potence transversale (8) et la barre de traction (9), la potence transversale (8) comprenant une pièce articulée (12) débordant transversalement du support de châssis et reliée de manière rigide au support de châssis (2), ladite pièce articulée portant sur la section débordante du support de châssis (2) l'axe de pivotement (14) vertical mentionné, qui est fixée sur une tête orientable (13) qui peut pivoter autour d'un axe de retournement plus ou moins parallèlement à l'axe de la longueur de la barre de traction par rapport à la barre de traction (9) pour retourner la charrue, la pièce articulée (12) reliée de manière rigide au support de châssis formant une flèche de châssis dont la longueur débordant du support de châssis (2) représente 50 à 150 % de la distance entre deux corps adjacents et/ou 50 à 100% de la longueur de la barre de traction (15).

2. Charrue selon la revendication précédente, **caractérisée en ce que** la barre de traction (9) est reliée à la roue porteuse (4) par un stabilisateur (18), en particulier une barre stabilisatrice, qui est articulé d'une part sur la barre de traction (9) et d'autre part sur la roue porteuse (4).

3. Charrue selon la revendication précédente, dans lequel le stabilisateur (18) constituant la seule liaison directe entre la roue porteuse (4) et la barre de traction (9) et/ou en ce que la charrue semi-portée est conçue sans châssis roulant fixe relié à la roue porteuse (4).

4. Charrue selon l'une des deux revendications précédentes, **caractérisée en ce que** le stabilisateur (18) monté de manière articulée est conçu de manière réglable en longueur, en particulier de manière à être télescopique.

5. Charrue selon l'une quelconque des revendications précédentes, **caractérisée en ce que** la potence-châssis principale (8) est fixé en rotation avec la barre de traction (9) transversalement à l'axe longitudinal de la barre de traction par rapport à un axe transversal.

6. Charrue selon l'une quelconque des revendications précédentes, **caractérisée en ce que** le support de roue (5) est monté sur le support de châssis (2) de manière à pouvoir pivoter autour d'un axe de rotation (7) vertical.

7. Charrue selon l'une quelconque des revendications précédentes, la barre de traction (9) possédant une longueur qui, en cas de modification de la largeur de travail des socs (3) individuels, modifie également la largeur de travail du premier soc (3) dans la même mesure ou dans une mesure proportionnée les uns par rapport aux autres et/ou possède une longueur de barre de traction d'environ 50 à 200 %, en particulier d'environ 75 à 150 %, de préférence de 100 à 150 % de l'écart de deux socs (3) adjacents dans le sens longitudinal du support de châssis (2).

8. Charrue selon l'une quelconque des revendications précédentes, dans lequel la barre de traction (9), par rapport au support de châssis (2), est pivotable autour dudit axe de pivotement (14) vertical sur une plage angulaire d'au moins 30°, de préférence de 45° ou plus, de préférence dans une plage angulaire de -10° à +35°.

9. Charrue selon la revendication précédente, dans lequel la barre de traction (9), par rapport au support de châssis (2), peut basculer autour de l'axe de pivotement (14) vertical mentionné de telle sorte qu'il est au moins possible, d'une part, d'ajuster une position dans laquelle la barre de traction (9) et le support de châssis (2) s'étendent parallèlement l'un par rapport à l'autre et, d'autre part, d'ajuster une position dans laquelle la barre de traction (9) est incliné de 45° par rapport au support de châssis (2).

10. Charrue selon l'une quelconque des revendications précédentes, dans lequel les moyens de réglage (16) pour régler l'angle de pivotement entre la barre de traction (9) et la potence transversale (8) comprennent un actionneur réglable en continu, de préférence pouvant être actionné par une force externe, en particulier un cylindre hydraulique.
